# EUROPÄISCHE PATENTSCHRIFT

(11) **EP 3 078 983 B1**
(45) Veröffentlichungstag und Bekanntmachung des Hinweises auf die Patenterteilung: **08.08.2018**
(21) Anmeldenummer: 15195689.3
(22) Anmeldetag: 14.06.2010
(51) Int. Cl.: G01S 17/02, G01S 17/66, G01S 17/87, G01C 15/00

(54) **KOORDINATENMESSGERÄT**
COORDINATE MEASURING DEVICE
POSITIONNEUR

(30) Priorität: 23.06.2009 CH 972092009
(43) Veröffentlichungstag der Anmeldung: 12.10.2016
(62) Teilanmeldung aus: 10724241.4
(73) Patentinhaber: Leica Geosystems AG, 9435 Heerbrugg (CH)
(72) Erfinder: BÖCKEM, Burkhard, CH-5415 Rieden AG (CH); FUCHS, Simon, CH-5040 Schöftland (CH)
(74) Vertreter: Kaminski Harmann

(56) Entgegenhaltungen:
- WO-A1-2007/079600
- US-A- 6 137 569
- US-B1- 6 411 371
- US-B1- 6 504 602

## Beschreibung

Die Erfindung bezieht sich auf ein Koordinatenmessgerät und ein Verfahren zum Betreiben eines Koordinatenmessgerätes gemäss dem Oberbegriff der entsprechenden unabhängigen Patentansprüche.

### STAND DER TECHNIK

Zur Messung der Position von sich bewegenden Zielpunkten werden Koordinatenmessgeräte, vielfach sogenannte Lasertracker, eingesetzt. Unter dem Begriff Lasertracker werden Vorrichtungen verstanden, die mindestens einen mit einem fokussierten Laserstrahl (in der folgenden Beschreibung mit Messstrahl bezeichnet) arbeitenden Distanzmesser aufweisen. Beispielsweise mit Hilfe eines um zwei Achsen drehbaren Spiegels wird die Richtung des Messstrahles auf den Zielpunkt eingestellt und mit den Drehachsen zugeordneten Winkelgebern erfasst. Der zu vermessende Zielpunkt wird mit einem Retroreflektor (insbesondere Würfeleckenprisma oder Anordnung von drei senkrecht aufeinander stehenden Spiegeln) versehen, wobei der Retroreflektor den darauf treffenden Messstrahl des Lasertrackers zu diesem zurück reflektiert. Dabei verläuft der reflektierte Messstrahl koaxial zum emittierten Messstrahl, wenn der Messstrahl genau zentrisch auf den Reflektor trifft, und parallel versetzt dazu, wenn der Messstrahl nicht zentrisch auf den Reflektor trifft. Je nach Ausführungsform des Trackers (Absolutdistanzmesser oder Interferometer) wird aus einem Vergleich des ausgesandten und reflektierten Laserlichtes auf eine absolute Distanz zwischen Lasertracker und Zielpunkt und/oder auf eine Veränderung dieser Distanz geschlossen. Aus den von den Winkelgebern erfassten Winkeln und der vom Distanzmesser detektierten Distanz wird die Position des Reflektors bzw. des Zielpunktes relativ zum Tracker berechnet.

Ein Teil des reflektierten Messstrahls wird üblicherweise auf eine PSD (position sensitive device) geleitet. Aus der Position, in der der reflektierte Messstrahl auf die lichtempfindliche Fläche der PSD trifft, wird auf die parallele Verschiebung des reflektierten relativ zum emittierten Messstrahl geschlossen. Die dadurch ermittelten Messdaten definieren den parallelen Versatz des reflektierten Messstrahles und werden verwendet für eine Steuerung der Messstrahl-Richtung derart, dass der Messstrahl dem Zielpunkt folgt (tracking), wenn sich dieser bewegt. Das heisst, es wird durch entsprechende Veränderung der Messstrahlrichtung bzw. der Ausrichtung des den Messstrahl ausrichtenden Spiegels dafür gesorgt, dass der parallele Versatz zwischen emittiertem und reflektiertem Messstrahl verkleinert wird bzw. möglichst klein bleibt.

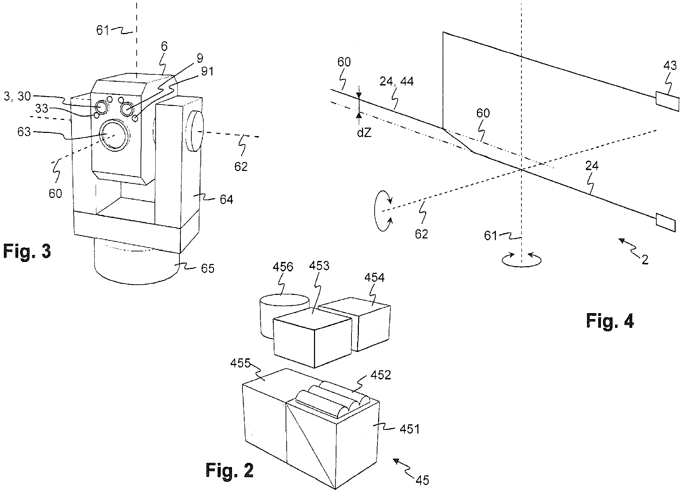

In WO 2007/079600 A1 sind verschiedene Anordnungen von optischen Distanzmessern und Bilderfassungssensoren beschrieben. In einer Anordnung (Figur 4) sind eine Übersichtskamera (104), eine im sichtbaren Spektralbereich arbeitende positionsempfindliche Diode (109) und eine Zoomkamera (106) alle in den Messlichtpfad einer Distanzmessvorrichtung (200, 300) gekoppelt. Die positionsempfindliche Diode (109) muss im sichtbaren Bereich arbeiten, um einen präzisen Messlichtstrahl eines He-Ne-Lasers eines Interferometers mit benutzen zu können. Zur Erfassung von reflektierenden Zielen ist eine Reflektorbeleuchtung (110) ausserhalb des Messlichtpfades angeordnet, welche, auf die Übersichtskamera abgestimmt, im sichtbaren Bereich arbeitet. Die Übersichtskamera muss im sichtbaren Bereich arbeiten, um qualitativ gute Bilder, insbesondere Farbbilder liefern zu können.

US 6,504,602 B1 beschreibt einen Theodoliten mit Distanzmessgerät. Eine automatische Zielerkennung verwendet abgestrahltes Licht im sichtbaren Bereich oder im nahen Infrarotbereich.

EP 2 071 283 A2 beschreibt die Verwendung von zwei separaten Kameras mit weitem und engem Blickwinkel, jeweils mit eigener, in die Kameraoptik eingekoppelter Lichtquelle. Die Kameras sind separat voneinander angeordnet, eine davon mit der Blickachse kollinear zu einem Distanzmesser, und arbeiten mit sichtbarem Licht. Eine Zielerkennung wird jeweils durch Ein/Ausschalten der jeweiligen Lichtquelle und anschliessender Differenzbildung aus den entsprechenden Bildern bewerkstelligt.

### DARSTELLUNG DER ERFINDUNG

Es ist Aufgabe der Erfindung, ein Koordinatenmessgerät und ein Verfahren zum Betreiben eines Koordinatenmessgerätes der eingangs genannten Art zu schaffen, welche eine kostengünstige Realisierung und gleichwohl präzise Messungen erlauben.

Diese Aufgabe lösen ein Koordinatenmessgerät und ein Verfahren zum Betreiben eines Koordinatenmessgerätes mit den Merkmalen der entsprechenden unabhängigen Patentansprüche.

Das Koordinatenmessgerät, weist also einen Träger auf, welcher bezüglich einer Basis um mindestens zwei Achsen drehbar ist, wobei der Träger durch Drehung um diese mindestens zwei Achsen mittels einer Regelungseinrichtung automatisch auf ein im Raum bewegbares Messhilfsmittel ausrichtbar ist. Es ist mindestens jeweils eine Aus- und/oder Eintrittsoptik der folgenden Einheiten gemeinsam bewegbar auf dem Träger angeordnet:
▪ mindestens eine optische Distanzmessvorrichtung zur Messung der Distanz (entlang einer Messtrecke) zu einem im Raum bewegbaren Messhilfsmittel;
▪ eine Infrarot-Lichtquelle und eine Optik (respektive optische Elemente) zum Abstrahlen eines Infrarot-Zielstrahles, wobei der Zielstrahl bei Reflexion am Messhilfsmittel als Infrarot-Zielpunkt sichtbar ist;
▪ eine Fein-Zielerfassungseinheit zur Bestimmung einer Fein-Position als der Position der Abbildung des Infrarot-Zielpunktes auf einem ersten Positionserfassungssensor, wobei die Fein-Zielerfassungseinheit und die Distanzmessvorrichtung eine gemeinsame Austrittsoptik aufweisen;
▪ eine zweite Lichtquelle, welche Licht zumindest im Infrarot-Bereich abstrahlt, wobei dieses Licht bei Reflexion am Messhilfsmittel als zweiter Zielpunkt sichtbar ist;
▪ eine Grob-Zielerfassungseinheit zur Bestimmung einer Grob-Position als der Position der Abbildung des zweiten Zielpunktes auf einem zweiten Positionserfassungssensor, wobei die Grob-Zielerfassungseinheit nur auf Licht im Infrarotbereich empfindlich ist.

Dabei ist die Regelungseinrichtung zum Ausrichten des Trägers auf das Messhilfsmittel durch Drehung um die mindestens zwei Achsen des Trägers nach Massgabe der Fein-Position und der Grob-Position eingerichtet.

Diese Regelung kann die Fein-Position und die Grob-Position alternativ berücksichtigen, indem beispielsweise bei Annäherung an den Zielpunkt von der Regelung anhand der Grob-Position auf die Fein-Position umgeschaltet wird. Es kann aber auch eine Regelung vorliegen, welche gleichzeitig zunächst beide Werte verarbeitet und dabei nur einen oder beide Werte auswählt und zur Regelung verwendet.

Durch die Anordnung der Aus- und/oder Eintrittsoptik aller Einheiten wird eine kompakte Einheit geschaffen, welche eine Vielzahl von Funktionen realisieren kann, und gleichwohl einen einfachen mechanischen Aufbau aufweist (nur zwei angetriebene Achsen). Alle Einheiten werden miteinander auf das Messhilfsmittel oder Ziel ausgerichtet. Mit den beiden Zielerfassungseinheiten können noch nicht erfasste Messhilfsmittel in einem grösseren Bereich detektiert, angefahren und verfolgt werden.

Vorzugsweise verläuft die optische Achse der Fein-Zielerfassungseinheit ausserhalb des Koordinatenmessgerätes koaxial zur optischen Achse der Distanzmessvorrichtung auf einer gemeinsamen Messachse. Dies setzt voraus, dass die Fein-Zielerfassungseinheit und die Distanzmessvorrichtung eine gemeinsame Austrittsoptik aufweisen. Eine gemeinsame Austrittsoptik (oder Eintrittsoptik) zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

In einer anderen bevorzugten Ausführungsform der Erfindung verlaufen die optischen Achsen der Fein-Zielerfassungseinheit und der Grob-Zielerfassungseinheit ausserhalb des Trägers nicht koaxial. Somit verlaufen dann die optischen Achsen entweder durch dieselbe Austrittsoptik, aber nicht koaxial, oder sie verlaufen durch separate Austrittsoptiken.

Typischerweise weist die Fein-Zielerfassungseinheit einen Öffnungswinkel oder Blickwinkel von weniger als 1° oder weniger als 2° oder weniger als 3° auf. Vorzugsweise weist die Grob-Zielerfassungseinheit einen Öffnungswinkel von mehr als 3° oder mehr als 10° oder mehr als 15° und vorzugsweise bis zu rund 30° (d.h. ±15°) auf.

In einer bevorzugten Ausführungsform der Erfindung sind die Fein-Zielerfassungseinheit und die Grob-Zielerfassungseinheit in voneinander getrennten Bereichen des Infrarot-Spektrums empfindlich (also jeweils entweder der entsprechende Sensor oder die Kombination des Sensors mit einem Filter). Dabei ist die Fein-Zielerfassungseinheit auf das Licht der Infrarot-Lichtquelle und die Grob-Zielerfassungseinheit auf das Licht der zweiten Lichtquelle empfindlich. Somit nimmt also die Fein-Zielerfassungseinheit das Licht der zweiten Lichtquelle nicht wahr, und nimmt die Grob-Zielerfassungseinheit das Licht der Infrarot-Lichtquelle nicht wahr.

Vorzugsweise befinden sich alle optischen und elektrischen Elemente der verschiedenen Einheiten auf dem Träger. Es ist aber auch möglich, dass einzelne Elemente einer oder mehrere Einheiten sich auf einer Basis oder in einer Zwischeneinheit befinden, und mit faseroptischen Leitern mit dem Träger verbunden sind. Solche Elemente sind beispielsweise Laserquellen oder Strahlteiler und Detektoren.

Vorzugsweise liegt in einer weiteren Ausführungsform der Erfindung eine zumindest im sichtbaren Bereich empfindliche Übersichtskamera zur Groblokalisierung des Messhilfsmittels anhand von Licht im sichtbaren Bereich vor. Diese weist vorzugsweise einen grösseren Sichtwinkel als die Grob-Zielerfassungseinheit auf. Damit ist es möglich, ein dreistufiges Verfahren zum Lokalisieren und Verfolgen des Messhilfsmittels zu realisieren, indem das Messhilfsmittel zuerst durch die Übersichtskamera gesucht, dann der Träger auf das Messhilfsmittel ausgerichtet wird, und dann das Messhilfsmittel mit der Grob-Zielerfassungseinheit und anschliessend mit der Fein-Zielerfassungseinheit angefahren wird.

Im Verfahren zum Betreiben des Koordinatenmessgerätes wird der Träger durch Drehung um die mindestens zwei Achsen des Trägers nach Massgabe der Fein-Position, der Grob-Position und optional auch von Messwerten der Übersichtskamera auf das Messhilfsmittel ausgerichtet.

In einer anderen Ausprägung der Erfindung, welche unabhängig von, oder in Kombination mit den bisher beschriebenen Elementen realisiert werden kann, weist das Koordinatenmessgerät einen Träger auf, welcher bezüglich einer Basis um mindestens zwei Achsen drehbar ist, wobei der Träger durch Drehung um diese mindestens zwei Achsen mittels einer Regelungseinrichtung automatisch auf ein im Raum bewegbares Messhilfsmittel ausrichtbar ist. Es ist mindestens jeweils eine Aus- und/oder Eintrittsoptik der folgenden Einheiten gemeinsam bewegbar auf dem Träger angeordnet:
▪ mindestens eine optische Distanzmessvorrichtung zur Messung der Distanz (entlang einer Messtrecke) zu einem im Raum bewegbaren Messhilfsmittel;
▪ eine Infrarot-Lichtquelle und eine Optik zum Abstrahlen eines Infrarot-Zielstrahles, wobei der Zielstrahl bei Reflexion am Messhilfsmittel als Infrarot-Zielpunkt sichtbar ist;
▪ eine Fein-Zielerfassungseinheit zur Bestimmung einer Fein-Position als der Position der Abbildung des Infrarot-Zielpunktes auf einem ersten Positionserfassungssensor, wobei die Fein-Zielerfassungseinheit und die Distanzmessvorrichtung eine gemeinsame Austrittsoptik aufweisen.

Dabei verläuft eine optische Achse der Fein-Zielerfassungseinheit ausserhalb des Koordinatenmessgerätes koaxial zur optischen Achse der Distanzmessvorrichtung auf einer gemeinsamen Messachse, und ist der Träger um eine im Betrieb des Koordinatenmessgerätes zumindest annähernd horizontal verlaufende Kippachse drehbar und um eine zumindest annähernd vertikal verlaufende Schwenkachse drehbar. Dabei schneidet die Messachse die Kippachse *nicht* und/oder schneidet die Messachse die Schwenkachse *nicht.*

Dadurch wird eine einfachere Fertigung des Strahlteilers zur Trennung des Strahlengangs von Distanzmessvorrichtung und Fein-Zielerfassungseinheit möglich: Gemäss dem Stand der Technik werden Strahlteiler entlang der Messachse derart gestaltet, dass der Strahlengang des nicht abgelenkten Lichtanteils im Messstrahl geradeaus verläuft, also ohne Versatz bezüglich der Messachse. Dies wird üblicherweise dadurch begründet, dass
a) einerseits die Messachse die Schwenkachse und die Kippachse schneiden soll, um die Geometrie der Messung und damit die Berechnung der Position des Messhilfsmittels möglichst einfach und präzise zu halten,
b) andererseits aus fabrikationstechnischen Gründen in einem hochpräzisen Gerät der Strahlengang im Innern des Gerätes exakt im Zentrum eines rohrförmigen Einsatzes verlaufen soll.

Entsprechend dieser Ausprägung der Erfindung wird auf die Einhaltung der Bedingung a) verzichtet. Dadurch werden die Berechnungen komplizierter, aber es kann als Strahlteiler eine halbdurchlässige Platte anstelle eines Prismas verwendet werden. Damit wiederum ist eine bezüglich Gewicht und Kosten verbesserte Auftrennung der Strahlengänge von Distanzmessvorrichtung und Fein-Zielerfassungseinheit möglich.

In einer anderen Ausprägung der Erfindung, welche unabhängig von, oder in Kombination mit den bisher beschriebenen Elementen realisiert werden kann, weist die Distanzmessvorrichtung eine Messlichtquelle zum Erzeugen eines Messlichtstrahles auf, sowie einen Strahlteiler welche einen Teil des erzeugten Messlichtstrahles auskoppelt, und einen Strahlaufweiter, welcher das ausgekoppelte Messlicht aufweitet und dadurch auf zwei separate Detektoren leitet.

Dadurch wird es möglich, ohne einen (aufwändigeren) Strahlteiler das Licht der Messlichtquelle auf zwei unabhängige Detektoren zu leiten, wovon der eine für die Regelung der Intensität der Messlichtquelle verwendet wird, und der andere aus Sicherheitsgründen, um bei einer zu hohen Ausgangsintensität der Messlichtquelle eine Notabschaltung auszulösen. Die Redundanz entsprechend dieser doppelten Ausführung der Sensoren ist aus Sicherheitsgründen erforderlich.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: wesentliche Komponenten und den Strahlengang in einem Koordinatenmessgerät gemäss der Erfindung;
- Figur 2: eine Sensoranordnung mit einem Strahlteiler;
- Figur 3: einen äusseren Aufbau eines Koordinatenmessgerätes; und
- Figur 4: einen Versatz zwischen einer Messachse und einer mechanischen Kollimationsachse.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

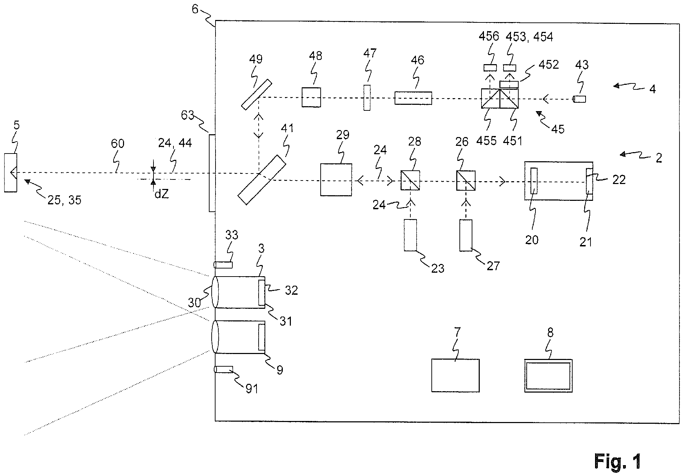

**Figur 1** zeigt schematisch den Strahlengang in einem Koordinatenmessgerät 1 in einer bevorzugten Ausführungsform der Erfindung. Die wesentlichen Elemente des Koordinatenmessgerätes 1 sind in oder auf einem Träger 6, vorzugsweise in einem gemeinsamen Gehäuse angeordnet. Eine Fein-Zielerfassungseinheit 2 erzeugt einen Infrarot-Zielstrahl 24, und eine Distanzmessvorrichtung 4 erzeugt einen Messlichtstrahl 44. Die beiden Strahlen treten durch eine gemeinsame Austrittsoptik 63 aus und verlaufen vorzugsweise koaxial entlang einer Messachse 60. Auf dem Träger sind ferner noch eine Grob-Zielerfassungseinheit 3 mit einer zweiten Lichtquelle 33, und eine Übersichtskamera 9 angeordnet. Eine Regelung und Steuerung 7 erfasst und verarbeitet die Messwerte verschiedener Sensoren und steuert Achslagemotoren zur Ausrichtung des Trägers 6. Eine Anzeigevorrichtung 8 zeigt Informationen über Messungen und den Gerätezustand und kann auch Bilder von einem der vorhanden Bildsensoren, insbesondere der Übersichtskamera 9, anzeigen.

In einem Messmodus oder Trackingmodus ist das Koordinatenmessgerät 1 respektive der Träger 6 auf ein Messhilfsmittel 5, beispielsweise einen Retroreflektor wie ein Tripelspiegel oder ein Würfeleckenprisma ausgerichtet. Die beiden Strahlen werden daran reflektiert und als Infrarot-Zielpunkt oder erster Zielpunkt 25 für das Koordinatenmessgerät 1 respektive als zweiter Zielpunkt 35 für die Distanzmessvorrichtung 4 sichtbar. Der zweite Zielpunkt 35 ist geometrisch und vom Messgerät 1 aus gesehen zumindest annähernd oder auch exakt am gleichen Ort im Raum wie der erste Zielpunkt 25 sichtbar. Konzeptionell und vom Wellenlängenbereich her werden die beiden Punkte 25, 35 aber als voneinander verschieden betrachtet.

Die Distanzmessvorrichtung 4 ist im gezeigten Beispiel ein Absolutdistanzmessgerät, kann aber auch ein Interferometer, oder eine Kombination von beiden sein. Darin strahlt eine Messlichtquelle 43 den Messlichtstrahl 44 ab. Dieser verläuft durch einen ersten Strahlteiler 451 zum Aufteilen des abgestrahlten Lichtes und einen zweiten Strahlteiler 455 zum Ablenken des rückkehrenden Lichtes. Die beiden Strahlteiler 451, 455 sind Teil einer Sensoreinheit 45. Der abgelenkte Teil des abgestrahlten Lichtes wird mittels einer Strahlaufweitung 452 aufgeweitet und auf zwei Intensitätssensoren 453, 454 geführt. Der eine dieser Intensitätssensoren 453 wird in bekannter Weise zur Amplitudenregelung der Messlichtquelle 43 verwendet, der andere 454 als zusätzliches Sicherungselement zum Detektieren einer unzulässig hohen Intensität. Die Strahlaufweitung 452 weist vorzugsweise ein Zylinderprisma oder eine Reihe von nebeneinander liegenden und beispielsweise einstückig geformten Zylinderprismen auf. Eine perspektivische Ansicht der Hauptelemente der Sensoreinheit 45 ist in der **Figur 2** dargestellt.

Das vom zweiten Strahlteiler 455 abgelenkte rückkehrende Licht wird auf einen Detektor 456 geleitet. Die dort detektierte Intensität wird in bekannter Weise zur Bestimmung der Absolutdistanz, beispielsweise nach dem Fizeau-Prinzip, verwendet. Dazu verlaufen abgehendes und rückkehrendes Messlicht 44 durch einen elektrooptischen Modulator 46, eine Viertelwellenplatte 47, eine Strahlaufweitung 48, einen Umlenkspiegel 49 und einen Strahlteiler 41, welche den Messlichtstrahl 44 mit dem Infrarot-Zielstrahl 24 der Fein-Zielerfassungseinheit 2 kombiniert respektive diese auf dem Rückweg wieder trennt.

Die Fein-Zielerfassungseinheit 2 weist eine Infrarot-Lichtquelle 23 auf, welche den Infrarot-Zielstrahl 24 erzeugt. Dieser wird über eine zweite Einkopplung 28 eingekoppelt, und gelangt über eine optionale weitere Strahlaufweitung 29 und den Strahlteiler 41 auf die Messachse 60. Das von der Infrarot-Lichtquelle 23 abgestrahlte Infrarot-Licht ist dadurch als Zielstrahl 24 in den gemeinsamen Strahlengang der Distanzmessungsvorrichtung 4 und der Fein-Zielerfassungseinheit 2 eingekoppelt. In der zweiten Einkopplung 28 wird das rückkehrende Licht entsprechend dem Infrarot-Zielpunkt 25 wieder ausgekoppelt und gelangt über eine erste Einkopplung 26 und einem ersten Bandpassfilter 20 auf den ersten Positionserfassungssensor 21. Dort wird die Fein-Position 22 des Abbildes des Infrarot-Zielpunkt 25 auf dem ersten Positionserfassungssensor 21 erzeugt.

In der ersten Einkopplung 26 wird optional noch Licht aus einer Pointer-Lichtquelle 27 eingekoppelt und gelangt als Strahl in gemeinsamen Strahlengang der Distanzmessungsvorrichtung 4 und der Fein-Zielerfassungseinheit 2. Dieses Licht der Pointer-Lichtquelle 27 ist im sichtbaren Bereich, so dass die Messachse 60 beim Auftreffen auf ein Objekt auch für einen Bediener sichtbar wird. Als sichtbarer Bereich werden dabei Wellenlängen von ca. 380-750 nm betrachtet. Der Übergang zum IR-Bereich liegt zwischen 700 nm und 800 nm.

Die Grob-Zielerfassungseinheit 3 weist einen zweiten Positionserfassungssensor 31 auf. Licht von der zweiten Lichtquelle 33, welche eine einzige oder mehreren Einzel-Lichtquellen aufweisen kann, wird mit einem relativ grossen Abstrahlwinkel abgestrahlt. Der Abstrahlwinkel ist etwas grösser als der Sichtwinkelbereich der Grob-Zielerfassungseinheit 3, welcher mehr als 3° oder mehr als 10° oder mehr als 15° oder bis zu rund 30° (d.h. ±15°) beträgt. Dadurch ist das Messhilfsmittel 5 für die Grob-Zielerfassungseinheit 3 auch sichtbar, wenn es in der Fein-Zielerfassungseinheit 2 nicht erfasst ist. Die Reflektion des Lichtes der zweiten Lichtquelle 33 wird als Grob-Position 32 auf einem zweiten Positionserfassungssensor 31 der Grob-Zielerfassungseinheit 3 sichtbar und messbar. Anhand dieser Messung wird der Träger 6 auf das Messhilfsmittel 5 ausgerichtet, bis die Fein-Zielerfassungseinheit 2 den eigenen Infrarot-Zielstrahl 24 detektiert. Anschliessend wird die Fein-Position 22 verwendet, um das Messhilfsmittel 5 zu verfolgen ("Tracking").

Wenn das Messhilfsmittel 5 mit beispielsweise einem Tripelspiegel das empfangene Licht exakt zurückreflektiert, muss die zweite Lichtquelle 33 nahe an der Eintrittsoptik der Grob-Zielerfassungseinheit 3 angeordnet sein.

Um gegenseitige Störungen von Fein-Zielerfassungseinheit 2 und Grob-Zielerfassungseinheit 3 zu vermeiden, arbeiten diese vorzugsweise in unterschiedlichen Wellenlängenbereichen des Infrarotspektrums. Beispielsweise weist dabei die Fein-Zielerfassungseinheit 2 ein erstes Bandpassfilter 20 mit einem ersten Durchlassbereich aufweist, und die Grob-Zielerfassungseinheit 3 ein zweites Bandpassfilter 30 mit einem zweiten Durchlassbereich aufweist, wobei sich die beiden Durchlassbereiche nicht überschneiden. Beispielsweise sind die beiden Wellenlängenbereiche 890-920 nm für die Fein-Zielerfassungseinheit 2 und 835-865 nm für die Grob-Zielerfassungseinheit 3. Zudem filtert das erste Bandpassfilter 20 Messlicht der Distanzmessvorrichtung 4 aus (aus der Messlichtquelle 43), welches durch den Strahlteiler 41 zur Fein-Zielerfassungseinheit 2 gelangt und diese stören könnte.

Die zweite Lichtquelle 33 kann, neben dem Licht im IR-Bereich, auch noch Licht im sichtbaren Bereich abstrahlen und dadurch auch als Beleuchtung für die Übersichtskamera 9 dienen. Die Übersichtskamera 9 kann auch eine eigene Beleuchtung 91 zum Abstrahlen von Licht zumindest im sichtbaren Bereich aufweisen.

**Figur 3** zeigt schematisch den äusseren Aufbau eines Koordinatenmessgerätes 1 mit den bereits beschriebenen Elementen Austrittsoptik 63, Grob-Zielerfassungseinheit 3 mit hier zwei zweiten Lichtquellen 33 an zwei Seiten der Eintrittsoptik der Grob-Zielerfassungseinheit 30, sowie der Übersichtskamera 9 mit ihrer Beleuchtung 91, hier ebenfalls mit zwei einzelnen Lichtquellen an zwei Seiten der Eintrittsoptik der Übersichtskamera 9. Ferner sind gezeigt: die Messachse 60, eine Kippachse 62, um welche der Träger 6 bezüglich eines Zwischenträgers 64 neigbar ist, und eine Schwenkachse 61, um welche der Zwischenträger 64 bezüglich einer Basis 65 drehbar ist.

**Figur 4** zeigt schematisch einen Versatz dZ zwischen dem Infrarot-Zielstrahl 24 innerhalb und ausserhalb des Trägers 6 respektive dessen Gehäuses. Im Innern des Gehäuses schneidet der Infrarot-Zielstrahl 24 aus mechanischen Gründen bevorzugt sowohl eine senkrechte Schwenkachse 61 (oder Stehachse) als auch eine horizontale Kippachse 62 (oder Neigeachse) des Trägers 6. Die Stehachse 61 ist senkrecht zur Kippachse 62, diese wiederum senkrecht zu einer Zielachse und zur Messachse 60. Die Zielachse (oder mechanische Kollimationsachse) entspricht dem Verlauf des Infrarot-Zielstrahles 24 im Innern des Trägers (bis zum Strahlteiler 41). Die Zielachse, die Schwenkachse 61 und die Kippachse 62 schneiden sich in einem Punkt. Die Messachse 60 schneidet hier aber nur die Schwenkachse 61 aber nicht die Kippachse 62. In einer nicht dargestellten Ausführungsform der Erfindung schneidet die Messachse 60 nur die Kippachse 62 aber nicht die Schwenkachse 61. In einer weiteren nicht dargestellten Ausführungsform der Erfindung schneidet die Messachse 60 weder die Schwenkachse 61 noch die Kippachse 62.

Die Messachse 60 und die Kippachse 62 (oder die Schwenkachse 61) sind dabei um einen Abstand von mindestens einem halben oder einem ganzen Millimeter voneinander beabstandet, vorzugsweise zwischen 1.4 mm und 2.5 mm. Die Verschiebung des Infrarot-Zielstrahles 24 der Fein-Zielerfassungseinheit 2 geschieht durch den Strahlteiler 41 welcher als Platte im Strahlengang des Infrarot-Zielstrahls 24 liegt, und für den Messlichtstrahl 44 als Spiegel wirkt.

**BEZUGSZEICHENLISTE**

| | | | |
|---|---|---|---|
| 1 | Koordinatenmessgerät | 44 | Messlichtstrahl |
| 2 | Fein -Zielerfassungseinheit | 45 | Sensoreinheit |
| 20 | erstes Bandpassfilter | 451 | Strahlteiler |
| 21 | erster Positionserfassungssensor | 452 | Strahlaufweitung |
| | | 453, 454 | Intensitätssensor |
| 22 | Fein-Position | 455 | Strahlteiler |
| 23 | Infrarot- Lichtquelle | 456 | Detektor |
| 24 | Infrarot-Zielstrahl | 46 | elektrooptischer Modulator |
| 25 | Infrarot-Zielpunkt | 47 | Viertelwellenplatte |
| 26 | erste Einkopplung | 48 | Strahlaufweitung |
| 27 | Pointer- Lichtquelle | 49 | Umlenkspiegel |
| 28 | zweite Einkopplung | 5 | Messhilfsmittel |
| 29 | Strahlaufweitung | 6 | Träger |
| 3 | Grob-Zielerfassungseinheit | 60 | Messachse |
| 30 | zweites Bandpassfilter | 61 | Schwenkachse |
| 31 | zweiter Positionserfassungssensor | 62 | Kippachse |
| | | 63 | Austrittsoptik, Deckscheibe |
| 32 | Grob-Position | 64 | Zwischenträger |
| 33 | zweite Lichtquelle | 65 | Basis |
| 35 | zweiter Zielpunkt | 7 | Regelung, Steuerung |
| 4 | Distanzmessvorrichtung | 8 | Anzeigevorrichtung |
| 41 | Strahlteiler, halbdurchlässiger Spiegel | 9 | Übersichtskamera |
| | | 91 | Beleuchtung für Übersichtskamera |
| 43 | Messlichtquelle | | |

## Patentansprüche

1. Koordinatenmessgerät (1), insbesondere ausgebildet als Lasertracker, aufweisend
einen Träger (6), welcher bezüglich einer Basis um mindestens zwei Achsen (61, 62) drehbar ist, wobei der Träger (6) durch Drehung um diese mindestens zwei Achsen (61, 62) mittels einer Regelungseinrichtung (7) automatisch auf ein im Raum bewegbares Messhilfsmittel (5) ausrichtbar ist,
wobei zumindest jeweils eine Aus- und/oder Eintrittsoptik der folgenden Einheiten gemeinsam bewegbar auf dem Träger (6) angeordnet sind,
• mindestens eine optische Distanzmessvorrichtung (4) zur Messung der Distanz zu einem im Raum bewegbaren Messhilfsmittel (5);
• eine erste Lichtquelle (23) und optische Elemente (28, 29, 41, 63) zum Abstrahlen eines ersten Zielstrahles (24), wobei der Zielstrahl (24) bei Reflexion am Messhilfsmittel (5) als erster Zielpunkt (25) sichtbar ist;
• eine Fein-Zielerfassungseinheit (2) zur Bestimmung einer Fein-Position (22) als der Position der Abbildung des ersten Zielpunktes (25) auf einem ersten Positionserfassungssensor (21), wobei die Fein-Zielerfassungseinheit (2) und die Distanzmessvorrichtung (4) eine gemeinsame Austrittsoptik (63) aufweisen;
• eine zweite Lichtquelle (33), welche Licht zumindest im Infrarot-Bereich abstrahlt, wobei dieses Licht bei Reflexion am Messhilfsmittel (5) als zweiter Zielpunkt (35) auf einem zweiten Positionserfassungssensor (31) einer Grob-Zielerfassungseinheit (3) sichtbar ist;
• wobei die Grob-Zielerfassungseinheit (3) zur Bestimmung einer Grob-Position (32) als der Position der Abbildung des zweiten Zielpunktes (35) auf einem zweiten Positionserfassungssensor (31) eingerichtet ist;
und wobei die Regelungseinrichtung (7) zum Ausrichten des Trägers (6) auf das Messhilfsmittel (5) durch Drehung um die mindestens zwei Achsen (61, 62) des Trägers nach Massgabe der Fein-Position (22) und der Grob-Position (32) eingerichtet ist;
**dadurch gekennzeichnet, dass**
• die Grob-Zielerfassungseinheit (3) nur auf Licht im Infrarotbereich empfindlich ist und
• auf dem Träger (6) ferner eine zumindest im sichtbaren Bereich empfindliche Übersichtskamera (9) angeordnet ist, sodass Bilder von der Übersichtskamera (9) auf einer Anzeigevorrichtung (8) anzeigbar sind.

2. Koordinatenmessgerät (1) gemäss Anspruch 1, wobei die optischen Achsen der Fein-Zielerfassungseinheit (2) und der Übersichtskamera (9) ausserhalb des Trägers (6) nicht koaxial verlaufen, insbesondere wobei die optischen Achsen durch separate Austrittsoptiken verlaufen.

3. Koordinatenmessgerät (1) gemäss Anspruch 1 oder 2, wobei die Übersichtskamera (9) eine eigene Beleuchtung (91) zum Abstrahlen von Licht zumindest im sichtbaren Bereich aufweist.

4. Koordinatenmessgerät (1) gemäss einem der bisherigen Ansprüche, wobei die Übersichtskamera (9) zur Groblokalisierung des Messhilfsmittels (5) anhand von Licht im sichtbaren Bereich ausgebildet ist.

5. Koordinatenmessgerät (1) gemäss einem der bisherigen Ansprüche, wobei eine Anzeigevorrichtung (8) vorgesehen ist, auf der Bilder von der Übersichtskamera (9) anzeigbar sind.

6. Koordinatenmessgerät (1) gemäss einem der bisherigen Ansprüche, wobei die optische Distanzmessvorrichtung (4) ein Absolutdistanzmessgerät oder ein Interferometer ist, oder eine Kombination von beiden.

7. Koordinatenmessgerät (1) gemäss einem der bisherigen Ansprüche, wobei das von der ersten Lichtquelle (23) abgestrahlte Licht als Zielstrahl (24) in den gemeinsamen Strahlengang der Distanzmessungsvorrichtung (4) und der Fein-Zielerfassungseinheit (2) eingekoppelt ist.

8. Koordinatenmessgerät (1) gemäss Anspruch 7, wobei eine optische Achse der Fein-Zielerfassungseinheit (2) ausserhalb des Koordinatenmessgeräts (1) koaxial zur optischen Achse der Distanzmessvorrichtung (4) auf einer gemeinsamen Messachse (60) verläuft.

9. Koordinatenmessgerät (1) gemäss Anspruch 7, wobei die optischen Achsen der Fein-Zielerfassungseinheit (2) und der Grob-Zielerfassungseinheit (3) ausserhalb des Trägers (6) nicht koaxial verlaufen.

10. Koordinatenmessgerät (1) gemäss einem der bisherigen Ansprüche, wobei
• die Fein-Zielerfassungseinheit (2) einen Öffnungswinkel von weniger als 1° oder weniger als 2° oder weniger als 3° aufweist und/oder
• die Grob-Zielerfassungseinheit (3) einen Öffnungswinkel von mehr als 3° oder mehr als 10° oder mehr als 15° aufweist

11. Koordinatenmessgerät (1) gemäss einem der bisherigen Ansprüche, wobei die Fein-Zielerfassungseinheit (2) und die Grob-Zielerfassungseinheit (3) in voneinander getrennten Bereichen des Spektrums empfindlich sind, und die Fein-Zielerfassungseinheit (2) auf das Licht der ersten Lichtquelle (23) und die Grob-Zielerfassungseinheit (3) auf das Licht der zweiten Lichtquelle (33) empfindlich ist,
insbesondere wobei die Fein-Zielerfassungseinheit (2) ein erstes Bandpassfilter (20) mit einem ersten Durchlassbereich aufweist, die Grob-Zielerfassungseinheit (3) ein zweites Bandpassfilter (30) mit einem zweiten Durchlassbereich aufweist, und sich die beiden Durchlassbereiche nicht überschneiden, und das erste Bandpassfilter (20) Messlicht der Distanzmessvorrichtung (4) ausfiltert.

12. Koordinatenmessgerät (1) gemäss einem der bisherigen Ansprüche, aufweisend eine Pointer-Lichtquelle (27) zur Erzeugung von Licht im sichtbaren Bereich, sowie eine Einkopplung (26) zum Einkoppeln dieses Lichtes als ein Strahl im gemeinsamen Strahlengang der Distanzmessungsvorrichtung (4) und der Fein-Zielerfassungseinheit (2).

13. Koordinatenmessgerät (1) gemäss einem der Ansprüche 1 bis 12, wobei der Träger (6) um eine im Betrieb des Koordinatenmessgeräts (1) zumindest annähernd horizontal verlaufende Kippachse (62) drehbar ist, und um eine zumindest annähernd vertikal verlaufende Schwenkachse (61) drehbar ist, und wobei die Messachse (60) die Kippachse *nicht* schneidet und/oder die Messachse (60) die Schwenkachse (61) *nicht* schneidet und wobei die Messachse (60) und die Kippachse (62) um einen Abstand von mindestens einem halben oder mindestens einem Millimeter voneinander beabstandet sind, vorzugsweise zwischen 1.4 mm und 2.5 mm.

14. Koordinatenmessgerät (1) gemäss einem der Ansprüche 1 bis 12, wobei die Distanzmessvorrichtung (1) eine Messlichtquelle (43) zum Erzeugen eines Messlichtstrahles (44) aufweist, sowie einen Strahlteiler (451) welche einen Teil des erzeugten Messlichtstrahles (44) auskoppelt, und einen Strahlaufweiter (452), welcher das ausgekoppelte Messlicht aufweitet und dadurch auf zwei separate Detektoren (453, 454) leitet,
insbesondere wobei der Strahlaufweiter (452) ein Zylinderprisma oder eine Reihe von nebeneinander liegenden und einstückig ausgeformten Zylinderprismen aufweist.

15. Verfahren zum Betreiben eines Koordinatenmessgerät, wobei das Koordinatenmessgerät aufweist
einen Träger (6), welcher bezüglich einer Basis um mindestens zwei Achsen (61, 62) drehbar ist,
wobei zumindest jeweils eine Aus- und/oder Eintrittsoptik der folgenden Einheiten gemeinsam bewegbar auf dem Träger (6) angeordnet sind,
• mindestens eine optische Distanzmessvorrichtung (4);
• eine erste Lichtquelle (23);
• eine Fein-Zielerfassungseinheit (2) wobei die Fein-Zielerfassungseinheit (2) und die Distanzmessvorrichtung (4) eine gemeinsame Austrittsoptik (63) aufweisen;
• eine zweite Lichtquelle (33);
• eine Grob-Zielerfassungseinheit (3);
aufweisend die folgenden Schritte:
• Messung der Distanz zu einem im Raum bewegbaren Messhilfsmittel (5) mittels der optischen Distanzmessvorrichtung (4);
• Abstrahlen eines ersten Zielstrahles (24) mittels der ersten Lichtquelle (23) und optischen Elemente (28, 29, 41, 63), wobei der Zielstrahl (24) bei Reflexion am Messhilfsmittel (5) als erster Zielpunkt (25) sichtbar wird;
• Bestimmung einer Fein-Position (22) als der Position der Abbildung des ersten Zielpunktes (25) auf einem ersten Positionserfassungssensor (21) der Fein-Zielerfassungseinheit (2);
• Abstrahlen von Licht zumindest im Infrarot-Bereich mittels einer zweiten Lichtquelle (33), wobei dieses Licht bei Reflexion am Messhilfsmittel (5) als zweiter Zielpunkt (35) auf einem zweiten Positionserfassungssensor (31) der Grob-Zielerfassungseinheit (3) sichtbar wird;
• Bestimmung einer Grob-Position (32) als der Position der Abbildung des zweiten Zielpunktes (35) auf dem zweiten Positionserfassungssensor (31) der Grob-Zielerfassungseinheit (3);
• automatisches Ausrichten des Trägers (6) auf das Messhilfsmittel (5) durch Drehung um die mindestens zwei Achsen (61, 62) des Trägers mittels der Regelungseinrichtung (7) nach Massgabe der Fein-Position (22) und der Grob-Position (32) eingerichtet ist,
**dadurch gekennzeichnet, dass**
• die Grob-Zielerfassungseinheit (3) nur auf Licht im Infrarotbereich empfindlich ist und
• auf dem Träger (6) ferner eine zumindest im sichtbaren Bereich empfindliche Übersichtskamera (9) angeordnet ist, sodass Bilder von der Übersichtskamera (9) auf einer Anzeigevorrichtung (8) anzeigbar sind.

## Claims

1. A coordinate measurement apparatus (1), in particular embodied as laser tracker, comprising
a carrier (6) which with respect to a base is rotatable about at least two axes (61, 62), wherein the carrier (6) by way of rotation about these at least two axes (61, 62), by way of a closed-loop control device (7), is configured to be automatically aligned onto a measurement aid (5) movable in space, wherein at least in each case one exit optical system and/or entry optical system of the following units are arranged on the carrier (6) in a commonly movable manner,
▪ at least one optical distance measurement device (4) for measuring the distance to a measurement aid (5) moveable in space;
▪ a first light source (23) and optical elements (28, 29, 41, 63) for radiating a first target beam (24), wherein the target beam (24), with a reflection on the measurement aid (5), is visible as a first target point (25);
▪ a fine target detection unit (2) for determining a fine position (22) as the position of the image of the first target point (25) on a first position detection sensor (21), wherein the fine target detection unit (2) and the distance measurement device (4) have a common exit optical system (63);
▪ a second light source (33) which radiates light at least in the infrared region, wherein this light, with a reflection at the measurement aid (5), is visible as a second target point (35) on a second position detection sensor (31) of a coarse target detection unit (3);
▪ wherein the coarse target detection unit (3) is configured for determining a coarse position (32) as the position of the image of the second target point (35) on a second position detection sensor (31);
and wherein the closed-loop control device (7) is configured for aligning the carrier (6) onto the measuring aid (5) by way of rotation about the at least two axes (61, 62) of the carrier in accordance with the fine position (22) and the coarse position (32);
**characterized in that,**
▪ the coarse target detection unit (3) is only sensitive to light in the infrared region and
▪ an overview camera (9) sensitive at least in the visible range is arranged on the carrier (6), such that images of the overview camera (9) can be displayed on a display device (8).

2. A coordinate measurement apparatus (1) according to claim 1, wherein the optical axes of the fine target detection unit (2) and the overview camera (9) do not run coaxially outside the carrier (6), in particular wherein the optical axes run through separate exit optical systems.

3. A coordinate measurement apparatus (1) according to claim 1 or 2, wherein the overview camera (9) has its own illumination (91) for radiating light at least in the visible region.

4. A coordinate measurement apparatus (1) according to any one of the preceding claims, wherein the overview camera (9) is configured for the coarse localisation of the measuring aid (5) by way of light in the visible region.

5. A coordinate measurement apparatus (1) according to any one of the preceding claims, wherein a display device (8) is foreseen, on which images of the overview camera (9) can be displayed.

6. A coordinate measurement apparatus (1) according to any one of the preceding claims, wherein the optical distance measurement device (4) is an absolute distance measurement apparatus or an interferometer, or a combination of both.

7. A coordination measurement apparatus (1) according to any one of the preceding claims, wherein the light radiated by the first light source (23), as a target beam (24), is coupled into the common beam path of the distance measurement device (4) and of the fine target detection unit (2).

8. A coordinate measurement apparatus (1) according to claim 7, wherein an optical axis of the fine target detection unit (2) runs outside the coordinate measurement apparatus (1) coaxially to the optical axis of the distance measurement device (4) on a common measurement axis (60).

9. A coordinate measurement apparatus (1) according to claim 7, wherein the optical axes of the fine target detection unit (2) and of the coarse target detection unit (3) do not run coaxially outside the carrier (6).

10. A coordinate measurement apparatus (1) according to any one of the preceding claims, wherein
▪ the fine target detection unit (2) has a viewing angle of less than 1° or less than 2° or less than 3° and/or
▪ the coarse target detection unit (3) has a viewing angle of more than 3° or more than 10° or more than 15°.

11. A coordinate measurement apparatus (1) according to any one of the preceding claims, wherein the fine target detection unit (2) and the coarse target detection unit (3) are sensitive in regions of the spectrum which are different from one another, and the fine target detection unit (2) is sensitive to light of the first light source (23) and the coarse target detection unit (3) to light of the second light source (33),
in particular wherein the fine target detection unit (2) comprises a first band-pass filter (20) with a first transmission range, the coarse target detection unit (3) a second band-pass filter (30) with a second transmission range, and the two transmission ranges do not overlap, and the first band-pass filter (20) filters out measurement light of the distance measurement device (4).

12. A coordinate measurement apparatus (1) according to any one of the preceding claims, comprising a pointer light source (27) for producing light in the visible region, as well as an incoupling (26) for coupling in this light as a beam into the common beam path of the distance measurement device (4) and of the fine target detection unit (2).

13. A coordinate measurement apparatus (1) according to any one of the claims 1 to 12, wherein the carrier (6) is rotatable about a tilt axis (62) running at least approximately horizontally in operation of the coordinate measurement apparatus (1), and about a pivot axis (61) running at least approximately vertically, and wherein the measurement axis (60) does *not* intersect the tilt axis and/or the measurement axis (60) does *not* intersect the pivot axis (61), wherein the measurement axis (60) and the tilt axis (62) are distanced to one another by a distance of at least one half or at least one millimetre, preferably between 1.4 mm and 2.5 mm.

14. A coordinate measurement apparatus (1) according to any one of the claims 1 to 12, wherein the distance measurement device (1) comprises a measurement light source (43) for producing a measurement light beam (44), as well as a beam splitter (451) which couples out a part of the produced measurement light beam (44), and a beam expander (452) which expands the coupled-out measurement light and by way of this leads it onto two separate detectors (453, 454), in particular wherein the beam expander (452) comprises a cylinder prism or a row of cylinder prisms which lie next to one another and are formed of one piece.

15. A method for operating a coordinate measurement apparatus, wherein the coordinate measurement apparatus comprises
a carrier (6) which with respect to a base is rotatable about at least two axes (61, 62),
wherein at least in each case one exit optical system and/or entry optical system of the following units are arranged on the carrier (6) in a commonly movable manner,
▪ at least one optical distance measurement device (4);
▪ a first light source (23);
▪ a fine target detection unit (2), wherein the fine target detection unit (2) and the distance measurement device (4) have a common exit optical system (63);
▪ a second light source (33);
▪ a coarse target detection unit (3),
comprising the following steps:
▪ measuring the distance to a measurement aid (5) moveable in space, by way of the optical distance measurement device (4);
▪ radiating a first target beam (24) by way of the first light source (23) and optical elements (28, 29, 41, 63), wherein the target beam (24), reflected at the measurement aid (5), is visible as a first target point (25);
▪ determining a fine position (22) as the position of the image of the first target point (25) on a first position detection sensor (21) of the fine target detection unit (2);
▪ radiating light at least in the infrared region by way of a second light source (33), wherein this light, reflected at the measurement aid (5), becomes visible as a second target point (35) on a second position detection sensor (31) of the coarse target detection unit (3);
▪ determining a coarse position (32) as the position of the image of the second target point (35) on the second position detection sensor (31) of the coarse target detection unit (3);
▪ automatically aligning the carrier (6) onto the measurement aid (5) by way of rotating about the at least two axes (61, 62) of the carrier by way of the closed-loop control device (7), in accordance with the fine position (22) and the coarse position (32)
**characterized in that**
▪ the coarse target detection unit (3) is only sensitive to light in the infrared region and
▪ an overview camera (9) sensitive at least in the visible range is arranged on the carrier (6), such that images of the overview camera (9) can be displayed on a display device (8).

## Revendications

1. Appareil de mesure de coordonnées (1), en particulier configuré comme laser tracker, qui présente :
un support (6) qui est rotatif par rapport à une base autour d'au moins deux axes (61, 62), le support (6) pouvant être orienté par rotation autour de ces deux axes qui existent au moins (61, 62) au moyen d'un dispositif de réglage (7) automatiquement sur un moyen auxiliaire de mesure (5) mobile dans l'espace, cependant qu'au moins respectivement une optique de sortie et/ou d'entrée des unités suivantes sont placées en étant mobiles conjointement sur le support (6),
• au moins un dispositif de mesure optique de la distance (4) pour la mesure de la distance par rapport à un moyen auxiliaire de mesure (5) mobile dans l'espace ;
• une première source de lumière (23) et des éléments optiques (28, 29, 41, 63) pour rayonner un premier faisceau de visée (24), le faisceau de visée (24) étant visible, lors de la réflexion sur le moyen auxiliaire de mesure (5), en tant que premier point cible (25) ;
• une unité de ciblage fin (2) pour déterminer une position fine (22) comme étant la position de la représentation du premier point cible (25) sur un premier capteur de détection de position (21), l'unité de ciblage fin (2) et le dispositif de mesure de la distance (4) présentant une optique de sortie commune (63) ;
• une seconde source de lumière (33) qui émet de la lumière au moins dans le domaine infrarouge, cette lumière étant visible, lors de la réflexion sur le moyen auxiliaire de mesure (5), en tant que second point cible (35) sur un second capteur de détection de position (31) d'une unité de ciblage grossier (3) ;
• l'unité de ciblage grossier (3) servant à déterminer une position grossière (32) comme étant la position de la représentation du second point cible (35) sur un second capteur de détection de position (31),
et le dispositif de réglage (7) étant configuré pour orienter le support (6) sur le moyen auxiliaire de mesure (5) par rotation autour des deux axes qui existent au moins (61, 62) du support en fonction de la position fine (22) et la position grossière (32),
**caractérisé en ce que**
• l'unité de ciblage grossier (3) n'est sensible qu'à la lumière dans le domaine infrarouge et
• une caméra de vue d'ensemble (9) sensible au moins dans le domaine visible est de plus placée sur le support (6) si bien que des images de la caméra de vue d'ensemble (9) peuvent être affichées sur un dispositif d'affichage (8).

2. Appareil de mesure de coordonnées (1) selon la revendication 1, les axes optiques de l'unité de ciblage fin (2) et de la caméra de vue d'ensemble (9) n'étant pas coaxiaux à l'extérieur du support (6), en particulier les axes optiques traversant des optiques de sortie séparées.

3. Appareil de mesure de coordonnées (1) selon la revendication 1 ou 2, la caméra de vue d'ensemble (9) présentant un éclairage propre (91) pour rayonner de la lumière au moins dans le domaine visible.

4. Appareil de mesure de coordonnées (1) selon l'une des revendications précédentes, la caméra de vue d'ensemble (9) étant configurée pour la localisation grossière du moyen auxiliaire de mesure (5) à l'aide de la lumière dans le domaine visible.

5. Appareil de mesure de coordonnées (1) selon l'une des revendications précédentes, un dispositif d'affichage (8) étant prévu sur lequel des images de la caméra de vue d'ensemble (9) peuvent être affichées.

6. Appareil de mesure de coordonnées (1) selon l'une des revendications précédentes, le dispositif de mesure optique de la distance (4) étant un appareil de mesure absolue de la distance ou un interféromètre ou une combinaison des deux.

7. Appareil de mesure de coordonnées (1) selon l'une des revendications précédentes, la lumière émise par la première source de lumière (23) étant couplée comme faisceau de visée (24) dans la trajectoire commune des faisceaux du dispositif de mesure de la distance (4) et de l'unité de ciblage fin (2).

8. Appareil de mesure de coordonnées (1) selon l'une des revendications précédentes, un axe optique de l'unité de ciblage fin (2) à l'extérieur de l'appareil de mesure de coordonnées (1) étant coaxial avec l'axe optique du dispositif de mesure de la distance (4) sur un axe de mesure commun (60).

9. Appareil de mesure de coordonnées (1) selon la revendication 7, les axes optiques de l'unité de ciblage fin (2) et de l'unité de ciblage grossier (3) à l'extérieur du support (6) n'étant pas coaxiaux.

10. Appareil de mesure de coordonnées (1) selon l'une des revendications précédentes,
• l'unité de ciblage fin (2) présentant un angle d'ouverture inférieur à 1° ou inférieur à 2° ou inférieur à 3° et/ou
• l'unité de ciblage grossier (3) présentant un angle d'ouverture supérieur à 3° ou supérieur à 10° ou supérieur à 15°.

11. Appareil de mesure de coordonnées (1) selon l'une des revendications précédentes, l'unité de ciblage fin (2) et l'unité de ciblage grossier (3) étant sensibles dans des régions séparées l'une de l'autre du spectre et l'unité de ciblage fin (2) étant sensible à la lumière de la première source de lumière (23) et l'unité de ciblage grossier (3) étant sensible à la lumière de la seconde source de lumière (33), en particulier l'unité de ciblage fin (2) présentant un premier filtre passe-bande (20) avec une première bande passante, l'unité de ciblage grossier (3) présentant un second filtre passe-bande (30) avec une seconde bande passante et les deux bandes passantes ne se coupant pas et la première bande passante (20) filtrant la lumière de mesure du dispositif de mesure de la distance (4).

12. Appareil de mesure de coordonnées (1) selon l'une des revendications précédentes présentant une source de lumière de pointeur (27) pour générer de la lumière dans le domaine visible ainsi qu'un couplage (26) pour coupler cette lumière comme un faisceau dans la trajectoire commune des faisceaux du dispositif de mesure de la distance (4) et de l'unité de ciblage fin (2).

13. Appareil de mesure de coordonnées (1) selon l'une des revendications 1 à 12, le support (6) étant rotatif autour d'un axe de basculement (62) au moins approximativement horizontal lorsque l'appareil de mesure des coordonnées (1) est en service et étant rotatif autour d'un axe de pivotement (61) au moins approximativement vertical et l'axe de mesure (60) ne coupant pas l'axe de basculement et/ou l'axe de mesure (60) ne coupant pas l'axe de pivotement (61) et cependant que l'axe de mesure (60) et l'axe de basculement (62) sont espacés l'un de l'autre d'un écart d'au moins un demi ou d'au moins un millimètre, de préférence entre 1,4 mm et 2,5 mm.

14. Appareil de mesure de coordonnées (1) selon l'une des revendications 1 à 12, le dispositif de mesure de la distance (1) présentant une source de lumière de mesure (43) pour produire un faisceau de lumière de mesure (44) ainsi qu'un séparateur de faisceaux (451) qui découple une partie du faisceau de lumière produit (44) et un dilatateur de faisceau (452) qui dilate la lumière de mesure découplée et la guide ainsi sur deux détecteurs séparés (453, 454), en particulier le dilatateur de faisceau (452) présentant un prisme cylindrique ou une série de prismes cylindriques situés l'un à côté de l'autre et formés en une pièce.

15. Procédé pour faire fonctionner un appareil de mesure de coordonnées, l'appareil de mesure de coordonnées présentant
un support (6) qui est rotatif par rapport à une base autour d'au moins deux axes (61, 62),
cependant qu'au moins respectivement une optique de sortie et/ou d'entrée des unités suivantes sont placées en étant mobiles ensemble sur le support (6),
• au moins un dispositif de mesure optique de la distance (4) ;
• une première source de lumière (23) ;
• une unité de ciblage fin (2), l'unité de ciblage fin (2) et le dispositif de mesure de la distance (4) présentant une optique de sortie commune (63) ;
• une seconde source de lumière (33) ;
• une unité de ciblage grossier (3),
présentant les étapes suivantes :
• mesure de la distance par rapport à un moyen auxiliaire de mesure (5) mobile dans l'espace au moyen du dispositif de mesure optique de la distance (4) ;
• émission d'un premier faisceau de visée (24) au moyen de la première source de lumière (23) et d'éléments optiques (28, 29, 41, 63), cependant que le faisceau de visée (24) devient visible en tant que premier point cible (25) lors de la réflexion sur le moyen auxiliaire de mesure (5) ;
• détermination d'une position fine (22) comme étant la position de la représentation du premier point cible (25) sur un premier capteur de détection de position (21) de l'unité de ciblage fin (2),
• émission de lumière au moins dans le domaine infrarouge au moyen d'une seconde source de lumière (33), cette lumière étant visible, lors de la réflexion sur le moyen auxiliaire de mesure (5), en tant que second point cible (35) sur un second capteur de détection de position (31) de l'unité de ciblage grossier (3) ;
• détermination d'une position grossière (32) comme étant la position de la représentation du second point cible (35) sur le second capteur de détection de position (31) de l'unité de ciblage grossier (3) ;
• orientation automatique du support (6) sur le moyen auxiliaire de mesure (5) par rotation autour des deux axes qui existent au moins (61, 62) du support au moyen du dispositif de réglage (7) en fonction de la position fine (22) et la position grossière (32),
**caractérisé en ce que**
• l'unité de ciblage grossier (3) n'est sensible qu'à la lumière dans le domaine infrarouge et
• une caméra de vue d'ensemble (9) sensible au moins dans le domaine visible est de plus placée sur le support (6) si bien que des images de la caméra de vue d'ensemble (9) peuvent être affichées sur un dispositif d'affichage (8).
